(19) Europäisches Patentamt / European Patent Office / Office européen des brevets

(11) **EP 2 625 803 B1**

## (12) FASCICULE DE BREVET EUROPEEN

(45) Date de publication et mention
de la délivrance du brevet:
**24.06.2015 Bulletin 2015/26**

(21) Numéro de dépôt: **11775928.2**

(22) Date de dépôt: **07.10.2011**

(51) Int Cl.:
*H04B 10/50* (2013.01)     *H04B 10/516* (2013.01)
*H04J 14/00* (2006.01)     *H04J 14/06* (2006.01)

(86) Numéro de dépôt international:
**PCT/EP2011/067577**

(87) Numéro de publication internationale:
**WO 2012/045869 (12.04.2012 Gazette 2012/15)**

(54) **METHODE ET SYSTEME DE TRANSMISSION WDM A CODAGE CHROMATO-TEMPOREL**

VEFAHREN UND SYSTEM FÜR WDM-ÜBERTRAGUNG MIT CHROMATO-ZEITLICHER CODIERUNG

METHOD AND SYSTEM FOR WDM TRANSMISSION WITH CHROMATO-TEMPORAL CODING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2010 FR 1058204**

(43) Date de publication de la demande:
**14.08.2013 Bulletin 2013/33**

(73) Titulaire: **Institut Telecom - Telecom Paristech
75013 Paris (FR)**

(72) Inventeurs:
- **REKAYA-BEN OTHMAN, Ghaya**
  **F-92160 Antony (FR)**
- **JAOUEN, Yves**
  **F-75019 Paris (FR)**
- **THEDREZ, Bruno**
  **F-75014 Paris (FR)**
- **MUMTAZ, Sami**
  **F-78390 Bois D'arcy (FR)**

(74) Mandataire: **Ilgart, Jean-Christophe et al
Brevalex
95, rue d'Amsterdam
75378 Paris Cedex 8 (FR)**

(56) Documents cités:
**US-A1- 2007 122 153**

- **YEN C T ET AL: "Realization of OSW/AWG-based bipolar wavelength-time optical CDMA for wired-wireless transmissions", OPTICAL FIBER TECHNOLOGY, ACADEMIC PRESS, LONDON, US, vol. 15, no. 1, 1 janvier 2009 (2009-01-01), pages 74-82, XP025674981, ISSN: 1068-5200, DOI: DOI:10.1016/J.YOFTE.2008.06.003 [extrait le 2008-07-21]**
- **IVAN GLESK ET AL: "Incoherent Ultrafast OCDMA Receiver Design With 2 ps All-Optical Time Gate to Suppress Multiple-Access Interference", IEEE JOURNAL OF SELECTED TOPICS IN QUANTUM ELECTRONICS, IEEE SERVICE CENTER, PISCATAWAY, NJ, US, vol. 14, no. 3, 1 mai 2008 (2008-05-01), pages 861-867, XP011215936, ISSN: 1077-260X**
- **IVERSEN K ET AL: "Time/wavelength coding for diffuse infrared communication systems with multiple optical carriers", PROCEEDINGS OF SPIE, SPIE, USA, vol. 2953, 1 janvier 1996 (1996-01-01), pages 204-212, XP009148354, ISSN: 0277-786X**

**Description**

## DOMAINE TECHNIQUE

La présente invention concerne de manière générale le domaine des télécommunications optiques et plus particulièrement celles utilisant un multiplexage en longueur d'onde ou WDM (*Wavelength Division Multiplexing*).

## ÉTAT DE LA TECHNIQUE ANTÉRIEURE

La technique de multiplexage en longueur d'onde (WDM) est bien connue dans le domaine des communications sur fibre optique. Elle consiste à multiplexer plusieurs signaux de longueurs d'ondes différentes sur une seule et même fibre optique. Cette technique permet d'acheminer un grand nombre de communications simultanément.

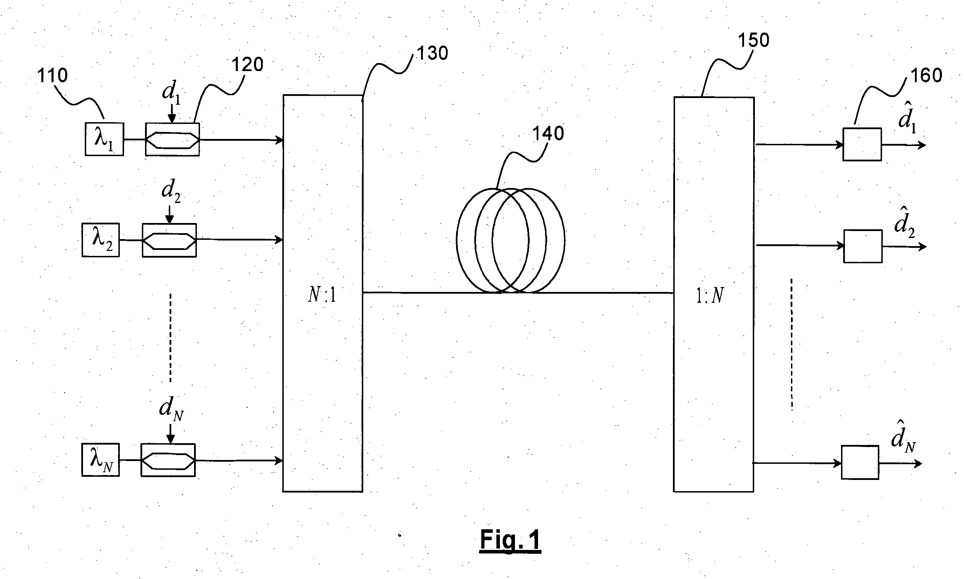

La Fig. 1 représente de manière très schématique un système de télécommunication de type WDM tel que couramment utilisé dans l'état de la technique.

Dans un tel système, des flux de données, par exemple à destination de différents utilisateurs, modulent des signaux optiques à différentes longueurs d'onde émis par les lasers 110. On notera que les modulateurs optiques externes 120 peuvent être absents si la modulation est réalisée directement en modulant la source de courant alimentant la diode laser.

Les signaux optiques ainsi modulés (en phase et/ou en intensité) sont multiplexés en longueur d'onde par un multiplexeur 130, sur une fibre optique, 140, généralement monomode. A la réception, les différents signaux sont démultiplexés en longueur d'onde par un démultiplexeur 150 et les données des différents flux sont estimées par les détecteurs 160.

En pratique, les noeuds d'un réseau sur fibre optique jouent simultanément le rôle d'émetteur et de récepteur : certaines longueurs d'onde sont insérées localement par multiplexage pour transmettre les données locales à distance et d'autres sont supprimées par démultiplexage pour desservir les utilisateurs locaux (*add-drop multiplexer*).

Les systèmes de télécommunications optiques de type WDM perméttent d'atteindre des débits de transmission élevés mais souffrent cependant de certaines limitations.

Une première limitation apparaît lorsque la puissance lumineuse injectée dans la fibre est suffisamment élevée pour y générer des effets non linéaires. Ce sera notamment le cas lorsque l'on doit recourir à des signaux optiques de forte intensité pour compenser l'atténuation de la fibre pour une transmission sur une longue distance.

En effet, une onde de forte intensité transmise à une première longueur d'onde peut modifier par effet Kerr l'indice de la fibre à une seconde longueur d'onde voisine de la première. Plus généralement, lorsque deux ondes se propagent dans une fibre optique, on observe une modulation de phase de l'une en fonction de l'intensité de l'autre et réciproquement. Ce phénomène connu sous la dénomination de modulation croisée de phase ou XPM (*Cross Phase Modulation*) est d'autant plus sensible que les intensités lumineuses en jeu sont importantes et que les longueurs d'onde sont proches. Il affecte donc en premier lieu les systèmes WDM à forte densité spectrale, dits aussi DWDM (*Dense WDM*), opérant sur une longue distance de transmission (*long haul*). Ce phénomène est particulièrement marqué lorsque se propagent dans la fibre à la fois des signaux optiques à faible débit, modulés en intensité, par modulation OOK (*On Off Keying*), et des signaux optiques à fort débit, modulés en phase (PSK) et/ou amplitude (QAM). Le rapport signal sur bruit en réception de ces signaux modulés en phase et/ou amplitude sera d'autant plus dégradé que leur efficacité spectrale, ou de manière équivalente leur ordre de modulation, sera plus élevé.

Plusieurs solutions ont été proposées dans l'état de la technique pour combattre les effets de la modulation XPM, notamment l'utilisation de techniques de modulation des signaux optiques ou bien encore de techniques de compensation ou de précompensation de la dispersion chromatique induite par la XPM. Pour un exemple particulier de modulation, on pourra se référer à l'article de J. Leibrich et al. intitulé « CR-RZ-DPSK for suppression of XPM on dispersion-managed long-haul optical WDM transmission on standard single-mode fiber » publié dans IEEE Photonics Technology Letters, vol. 14, No. 2, Feb. 2002, pp 155. Pour un exemple de compensation de dispersion chromatique on pourra notamment se référer à la demande de brevet US-A-2009/0334224.

Ces techniques de modulation ou de compensation sont toutefois complexes à mettre en oeuvre. En outre, dans le premier cas, elles supposent généralement que tous les signaux optiques présents dans la fibre aient été modulés avec le même type de modulation. Lorsque des signaux modulés par tout ou rien (OOK) et des signaux modulés par modulation CR-RZ-DPSK, comme préconisé dans l'article précité, se copropagent dans la fibre, ces derniers sont bien entendu affectés par une modulation XPM.

Une autre limitation des systèmes de télécommunication optiques est due aux phénomènes de perte dépendante de la polarisation ou PDL (*Polarization Dépendent Loss*) et de dispersion modale de polarisation ou PMD (*polarisation Mode Dispersion*) au sein d'une fibre optique. En effet, dans une fibre idéale, deux signaux polarisés rectilignement selon deux axes orthogonaux subissent la même atténuation et se propagent à la même vitesse. En pratique cependant, des défauts d'asymétrie et des imperfections aléatoires de la fibre affectent différemment deux polarisations orthogonales et conduisent à une distorsion du signal qui limite le débit maximum que l'on peut atteindre sur la fibre.

Là encore différentes solutions ont été proposées dans l'état de la technique, faisant appel soit à des techniques de compensation comme décrit dans la demande US-A-2004004755, soit à une modulation indépendante de chaque mode de polarisation, comme décrit dans le brevet US-B-7643760.

Le document US-A-2007122153 concerne un système d'émission/réception de type WDM utilisant un codeur chromato-temporel. Les polarisations des canaux de transmission adjacents sont choisies orthogonales.

Toutefois ces solutions sont complexes à mettre en oeuvre en particulier pour les systèmes WDM à forte densité spectrale.

Le but de la présente invention est de remédier aux inconvénients précités et notamment de proposer un émetteur/un récepteur pour système de télécommunication optique WDM permettant de s'affranchir simplement des effets de la modulation XPM et, subsidiairement, des effets de la PDL et de la PMD dans la fibre.

## EXPOSÉ DE L'INVENTION

Dans un mode de réalisation, l'invention est définie par un codeur, dit codeur chromato-temporel, transformant chaque bloc de données à transmettre $d_1,...,d_M$ en une matrice de code :

$$\mathbf{C} = \begin{pmatrix} c_{1,1}^{II} & c_{2,1}^{II} & \cdots & c_{N,1}^{II} \\ c_{1,1}^{\perp} & c_{2,1}^{\perp} & \cdots & c_{N,1}^{\perp} \\ c_{1,2}^{II} & c_{2,2}^{II} & \cdots & c_{N,2}^{II} \\ c_{1,2}^{\perp} & c_{2,2}^{\perp} & \cdots & c_{N,2}^{\perp} \\ \vdots & \vdots & \vdots & \vdots \\ c_{1,T}^{II} & c_{2,T}^{II} & \cdots & c_{N,T}^{II} \\ c_{1,T}^{\perp} & c_{2,T}^{\perp} & \cdots & c_{N,T}^{\perp} \end{pmatrix}$$

chaque élément de la matrice étant relatif à une utilisation de canal, à une longueur d'onde de ladite pluralité et à une direction de polarisation ;

une pluralité de polariseurs respectivement associés aux dites longueurs d'onde, chaque polariseur polarisant un faisceau laser à une longueur d'onde selon deux directions de polarisation ;

une pluralité de modulateurs, chaque modulateur modulant un faisceau laser à une longueur d'onde, polarisé selon une direction de polarisation, pendant une utilisation de canal au moyen de l'élément de la matrice correspondant ;

un multiplexeur adapté à multiplexer les faisceaux laser ainsi polarisés et modulés sur une fibre optique.

Avantageusement, ledit code est linéaire. Il peut être un code d'Alamouti, un code d'argent, un code d'or ou encore un code parfait.

L'invention concerne également un récepteur pour recevoir un bloc de symboles transmis par l'émetteur selon le mode de réalisation précité, ledit récepteur comprenant un démultiplexeur adapté à démultiplexer le signal reçu en une pluralité de faisceaux ayant des longueurs d'onde différentes, comprenant en outre :

une pluralité de polariseurs, chaque polariseur polarisant un desdits faisceaux selon une première et une seconde directions de polarisation ;

une pluralité de démodulateurs, chaque démodulateur démodulant un desdits faisceaux polarisés et fournissant une variable de décision pendant une utilisation du canal ;

un décodeur par réseau de points adapté à recevoir lesdites variables de décision pendant une pluralité d'utilisations de canal et à en déduire une estimation des symboles du dit bloc.

Avantageusement, le décodeur par réseau de points est un décodeur par sphère ou un décodeur de type SB-stack ou encore un décodeur par réseau de points mettant en oeuvre une réduction LLL du réseau.

## BRÈVE DESCRIPTION DES DESSINS

D'autres caractéristiques et avantages de l'invention apparaîtront à la lecture de modes de réalisation préférentiels de l'invention en référence aux figures jointes parmi lesquelles :

La Fig. 1 représente schématiquement un système de télécommunication de type WDM, connu de l'état de la technique ;

La Fig. 2A représente un émetteur pour système de télécommunication de type WDM, selon un exemple utile à la compréhension de l'invention ;

La Fig. 2B représente un récepteur pour système de télécommunication de type WDM, selon un exemple utile à la compréhension de l'invention ;

La Fig. 3A représente un émetteur pour système de télécommunication de type WDM, selon un mode de réalisation de l'invention ;

La Fig. 3B représente un récepteur pour système de télécommunication de type WDM, selon un mode de réalisation de l'invention.

## EXPOSÉ DÉTAILLÉ DE MODES DE RÉALISATION PARTICULIERS

L'idée à la base de l'invention est d'utiliser une technique similaire à celle du codage spatio-temporel dans les systèmes multi-antenne ou MIMO (*Multiple In Multiple Out*) pour non seulement s'affranchir de la modulation croisée (XPM) mais encore mettre à profit la diversité induite par cette dernière.

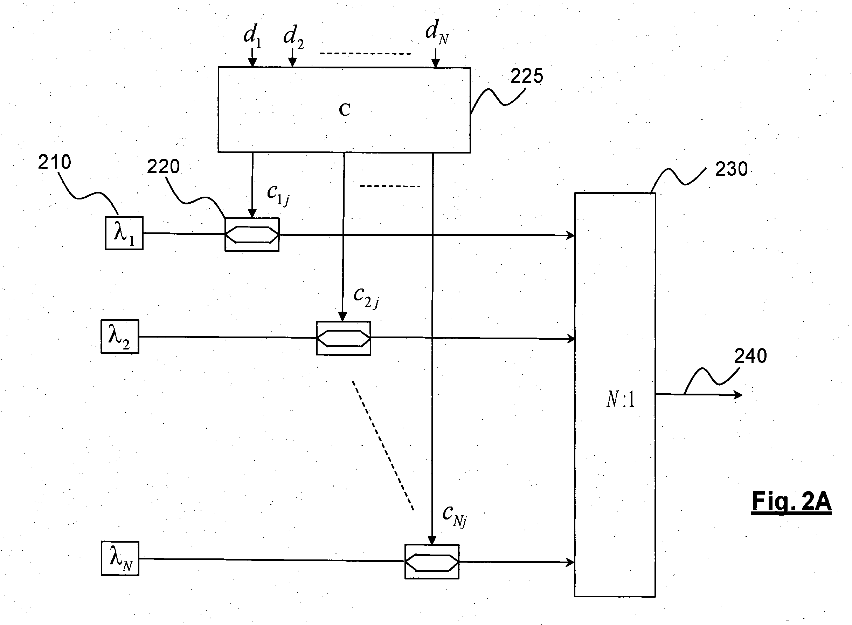

La Fig. 2A représente schématiquement un émetteur pour système de télécommunication optique WDM, selon un premier exemple utile à la compréhension de l'invention. L'homme du métier comprendra que cet émetteur peut notamment être utilisé dans un noeud de type *add-and-drop* d'un réseau sur fibre optique.

Nous supposerons que l'émetteur doit transmettre une pluralité $M$ de flux de données et que pour un intervalle de transmission ou TTI (*Time Transmission Interval*) nous noterons $d_1$ à $d_M$ les symboles à transmettre. Ces symboles sont codés par un codeur chromato-temporel 225 qui associe à chaque bloc ou vecteur de symboles $(d_1,...,d_M)$ une matrice $\mathbf{C}$ de taille $N \times T$, dénommée ci-après matrice chromato-temporelle

$$\mathbf{C} = \begin{pmatrix} c_{1,1} & c_{1,2} & \cdots & c_{1,T} \\ c_{2,1} & c_{2,2} & \cdots & c_{2,T} \\ \vdots & \vdots & \ddots & \vdots \\ c_{N,1} & c_{N,2} & \cdots & c_{N,T} \end{pmatrix} \quad (1)$$

où les coefficients $c_{n,t}$, $n=1,...,N$, $t=1,...,T$ (avec $N \geq 2$ et $T \geq 2$) du code sont en règle générale des coefficients complexes dépendant des symboles d'information, $N$ est le nombre de longueurs d'onde utilisées par l'émetteur, $T$ est un entier indiquant l'extension temporelle du code, c'est-à-dire le nombre d'utilisations du canal ou PCUs *(Per Channel Use).*

Lors d'une utilisation de canal $t$ le coefficient $c_{n,t}$ module le signal optique émis par le laser 210 à la longueur d'onde $\lambda_n$. La modulation mise en oeuvre dans le modulateur 220 peut être une modulation en phase et/ou en amplitude. Les types de modulation et les ordres de modulation utilisés pour les différentes longueurs d'onde ne sont pas nécessairement identiques. Les signaux optiques ainsi modulés sont ensuite multiplexés par le multiplexeur 230 pour être transmis sur la fibre optique 240. On comprendra ainsi que pendant une utilisation de canal $t$, le $t$-ième vecteur-colonne de la matrice $\mathbf{C}$ est transmis sur la fibre optique et qu'au terme des $T$ utilisations de canal, l'ensemble des coefficients de la matrice aura été transmis.

A l'instar d'un code spatio-temporel, le code chromato-temporel est caractérisé par son débit, c'est-à-dire par le nombre de symboles d'information qu'il transmet par instant d'utilisation de canal (PCU). Le code est dit à plein débit s'il est $N$ fois plus élevé que le débit relatif à une seule longueur d'onde.

Le codage chromato-temporel pourra être linéaire, autrement dit la matrice $\mathbf{C}$ du code pourra s'écrire sous la forme :

$$\mathbf{vec(C)} = \mathbf{Gd} \quad (2)$$

où **vec(C)** est le vecteur colonne obtenu en concaténant les vecteurs colonne de la matrice $\mathbf{C}$, $\mathbf{d}=(d_1,...,d_M)^T$ et $\mathbf{G}$ est une matrice de taille $NT \times M$, dite matrice génératrice du code.

Selon un premier exemple de codage chromato-temporel linéaire pour un émetteur à deux longueurs d'onde $\lambda_1$ et $\lambda_2$, on pourra utiliser la matrice de codage spatio-temporel proposée par S.M. Alamouti dans son article intitulé « A transmit diversity technique for wireless communications », publié dans IEEE Journal on selected areas in communications, vol. 16, pp. 1451-1458, Oct. 1998. Lé code d'Alamouti est défini par la matrice de taille 2×2:

$$\mathbf{C} = \begin{pmatrix} d_1 & -d_2^* \\ d_2 & d_1^* \end{pmatrix} \qquad\qquad (3)$$

où $d_1$ et $d_2$ sont deux symboles d'information à transmettre et $d_1^*$ et $d_2^*$ leurs conjugués respectifs.

Selon un second exemple de réalisation de codage chromato-temporel linéaire, on utilisera avantageusement le code d'or tel que défini dans l'article de J.C. Belfiore et al. intitulé « The golden code : a 2x2 full rate space-time code with nonvanishing déterminants » dont la matrice est donnée par :

$$\mathbf{C} = \begin{pmatrix} \alpha(d_1 + d_2\theta) & \alpha(d_3 + d_4\theta) \\ i\overline{\alpha}(d_3 + d_4\theta) & \overline{\alpha}(d_1 + d_2\theta) \end{pmatrix} \qquad\qquad (4)$$

où $\theta = \dfrac{1+\sqrt{5}}{2}$ , $\overline{\theta} = \dfrac{1-\sqrt{5}}{2}$ , $i = \sqrt{-1}$ , $\alpha = 1 + i(1-\theta)$, $\overline{\alpha} = 1 + i(1-\overline{\theta})$, où les symboles d'information à transmettre $d_1$ à $d_4$ sont des symboles d'une constellation QAM pouvant s'écrire sous la forme $\lambda + i\mu$ où $\lambda$ et $\mu$ sont des entiers relatifs.

Le code d'or présente l'avantage d'être à plein débit et à diversité maximale.

Selon un troisième exemple de réalisation de codage chromato-temporel linéaire, on utilisera avantageusement le code d'argent tel que décrit par exemple dans l'article de E. Biglieri et al. intitulé « On fast-decodable space-time block codes » publié dans IEEE Trans. on Inf. Theory, pages 524-530, vol. 55, N°2, Feb. 2009, ou encore dans l'article de G. Rekaya Ben Othman et al. intitulé « Ideal Structure of the silver code », Proc. of ISIT 2009, Seoul, June 28-July 3, 2009, pp. 2818-2822.

La matrice du code d'argent est donnée par :

$$\mathbf{C} = \begin{pmatrix} d_1 & -d_2^* \\ d_2 & d_1^* \end{pmatrix} + \begin{pmatrix} 1 & 0 \\ 0 & -1 \end{pmatrix}\begin{pmatrix} z_1 & -z_2^* \\ z_2 & z_1^* \end{pmatrix} \qquad\qquad (5)$$

avec $\begin{pmatrix} z_1 \\ z_2 \end{pmatrix} = \mathbf{U}\begin{pmatrix} d_3 \\ d_4 \end{pmatrix}$ où U est la matrice unitaire définie par :

$$\mathbf{U} = \frac{1}{\sqrt{7}}\begin{pmatrix} 1+i & -1+2i \\ 1+2i & 1-i \end{pmatrix} \qquad\qquad (6)$$

Le code d'argent présente également l'avantage d'être à plein débit et à diversité maximale.

Selon un quatrième exemple de réalisation de codage chromato-temporel, on pourra utiliser pour un nombre $N$ quelconque de longueurs d'onde, un code parfait de matrice $N \times N$, tel que défini dans l'article de F. Oggier et al. intitulé « Perfect space-time block codes » publié dans IEEE Trans. Inf. Theory, vol. 52, no. 9, pp. 3885-3902, Sept. 2006. On rappelle qu'un code parfait a pour propriétés d'être à plein débit, de présenter un déterminant qui ne tend pas vers zéro lorsque la taille de la constellation de modulation tend vers l'infini, autrement dit un gain supérieur à une borne non nulle indépendante de la constellation de modulation, de présenter une énergie par symbole codé (c'est-à-dire par élément de la matrice) du même ordre que celle des symboles de la constellation, et une même énergie moyenne par symbole codé (la moyenne étant prise sur les $N$ intervalles consécutifs de transmission). On trouvera des exemples de codes parfaits pour un nombre quelconque $N$ de longueurs d'onde (en lieu et place d'antennes) dans l'article de P. Elia et al. intitulé « Perfect space-time codes for any number of antennas » publié dans IEEE Trans. Inf. Theory, vol. 55, no 11, Nov. 2007, pp. 3853-3868.

Selon un cinquième mode de réalisation de codage chromato-temporel, on pourra utiliser une matrice de codage de type TAST (Threaded Algebraic Space Time), telle que décrite dans l'article de M.O. Damen et al. intitulé « Linear threaded algebraic space-time constellations » publié dans IEEE Trans. on Information Theory, Vol. 49, No. 10, pp. 2372-2388, Oct. 2003, à la différence près que le degré de liberté spatial (les différentes antennes du système ST) est remplacé par un degré de liberté chromatique (les différentes longueurs d'onde du système chromato-temporel).

En tout état de cause, l'homme du métier comprendra que, quelle que soit la matrice de codage chromato-temporel utilisée, les perturbations induites par la modulation XPM aux différentes longueurs d'onde ne sont plus combattues comme dans les systèmes de l'art antérieur mais au contraire les relations de dépendance entre les différentes longueurs d'onde, introduites par le codage sont mises à profit pour réduire la sensibilité à ces perturbations.

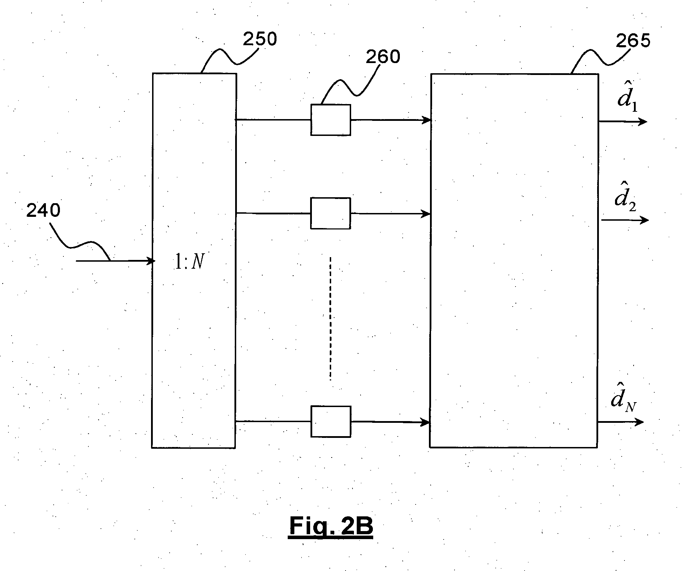

La Fig. 2B représente de manière schématique un récepteur pour système de télécommunication optique WDM, selon un premier exemple utile à la compréhension de l'invention. Ce récepteur peut notamment être utilisé dans un noeud de type *add-and-drop* d'un réseau en fibre optique.

Le récepteur comprend un démultiplexeur en longueur d'onde 250 séparant les longueurs d'onde $\lambda_1$ à $\lambda_N$, des démodulateurs 260 fournissant des variables de décision $y_{n,t}$ et un décodeur chromato-temporel 265 en déduisant les valeurs dures des symboles d'information $\hat{d}_1,...,\hat{d}_N$. Bien entendu l'opération de démodulation en 260 est inverse de l'opération de modulation 220 pour la longueur d'onde correspondante. Plus précisément, le décodeur chromato-temporel utilise les variables de décision $y_{n,t}$ $n$=1,..,$N$, $t$=1,...,$T$ relatives à un même intervalle de transmission et effectue un décodage par réseau de points, de manière connue en soi, pour en déduire les symboles $\hat{d}_1, ..., \hat{d}_M$. Le décodeur par réseau de points pourra être avantageusement un décodeur par sphère, un décodeur par réseau de points aidé par réduction LLL (Lenstra, Lenstra, Lovasz) du réseau, ou encore un réseau LLL-réduit augmenté comme décrit dans l'article de L. Luzzi et al. intitulé « Augmented Lattice Reduction for MIMO decoding ».

Le signal reçu pendant un intervalle de transmission, autrement dit pendant N utilisations successives du canal peut être représenté sous la forme matricielle :

$$\mathbf{Y} = \mathbf{HC} + \mathbf{N} \qquad\qquad (7)$$

où **Y** est la matrice de taille $N \times T$ dont les éléments sont les valeurs $y_{n,t}$ $n$=1,..,$N$, $t$=1,...,$T$, **C** est la matrice de codage chromato-temporel utilisé à la réception, **H** est une matrice à coefficients complexes de taille $N \times N$ représentative du canal de transmission, et **N** est une matrice de bruit de taille $N \times T$.

Si l'on suppose, sans perte de généralité, que le codage chromato-temporel est linéaire, l'expression (7) devient, sous forme vectorielle :

$$\mathbf{vect}(\mathbf{Y}) = \mathbf{Fd} + \mathbf{vec}(\mathbf{N}) \qquad\qquad (8)$$

où **F** est une matrice de taille $NT \times M$ obtenue à partir de la matrice génératrice du code **G** et de la matrice **H**. Les coefficients de **H** peuvent être estimés par le récepteur au moyen de symboles pilote, de manière connue en soi.

L'expression (8) montre que si les symboles $d_1,...,d_M$ appartiennent à une constellation de modulation QAM, le vecteur **vect(Y)** appartient bien à un réseau de points en absence de bruit. Les symboles estimés $\hat{d}_1, ..., d_M$ sont obtenus, grâce au décodeur 265 à partir du point du réseau le plus proche de **vect(Y)** appartenant à la constellation produit.

Selon une variante, le décodeur chromato-temporel pourra être à sorties souples en utilisant par exemple un décodeur par sphère à sorties souples du type décrit dans l'article de J. Boutros et al. intitulé « Soft-input soft-output lattice sphere décoder for linear channels », Proc. of the IEEE Globecom '03, encore dénommé décodeur LSD (*List Sphere Decoder*). Un tel décodeur utilise un algorithme de liste et détermine de manière itérative, par exemple sous forme de logarithmes de valeurs de vraisemblance, LLR (*Logarithm of Likelihood Ratio*), les probabilités a *posteriori* des symboles d'information, compte tenu des points du réseau inclus dans une sphère centrée sur un point représentant le signal reçu ou, de préférence, sur un point du réseau correspondant à une première estimation au sens du maximum de vraisemblance (estimation ML), c'est-à-dire au point de la constellation le plus proche du signal reçu.

Selon une autre variante, le décodeur chromato-temporel pourra avantageusement utiliser un décodeur par sphère à pile, dit encore *Spherical-Bound Stack Decoder*, du type décrit dans l'article de R. Ouertani et al. intitulé « The spherical bound stack decoder » publié dans IEEE International Conf. on wireless and mobile computing, networking and communications, (WiMob), Avignon, France, Octobre 2008, encore décrit dans la demande de brevet FR-A-2930861. Cette variante existe sous forme d'une version à sorties dures ou d'une version à sorties souples.

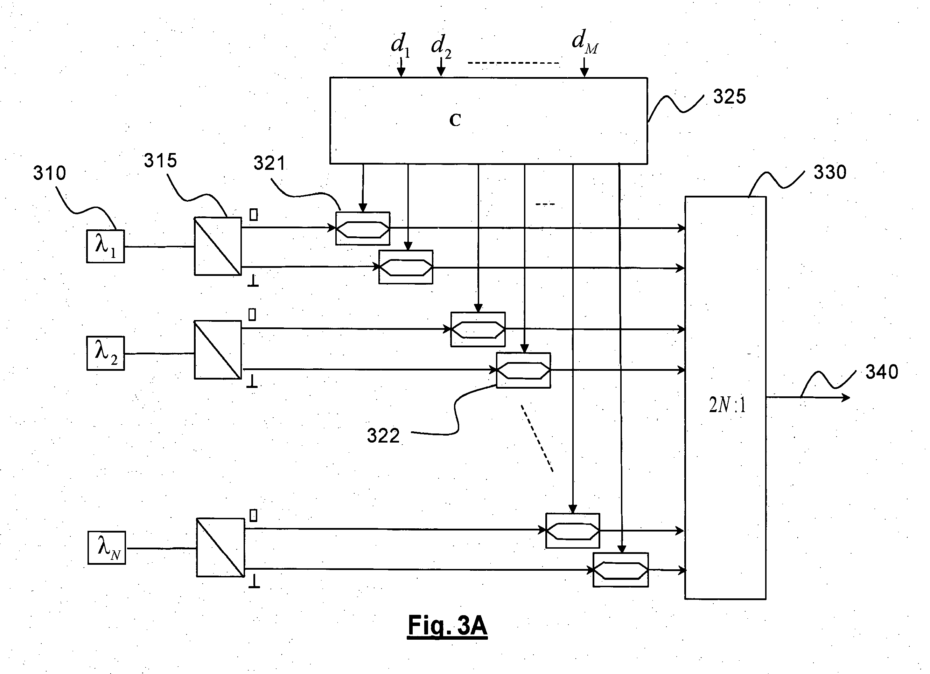

La Fig. 3A représente de manière schématique un émetteur pour système de télécommunication optique WDM, selon un mode de réalisation de l'invention.

A la différence du premier exemple d'émetteur précité, cet émetteur utilise à la fois la diversité introduite par la modulation XPM et celle introduite par la perte dépendante de la polarisation PDL. Il permet de compenser au niveau du récepteur à la fois les effets de la modulation XPM et ceux de la perte dépendante de la polarisation PDL.

Plus précisément, l'émetteur comprend une pluralité $N$ de sources laser 310 émettant à une pluralité de longueurs d'onde $\lambda_1,...,\lambda_N$, une même pluralité de polariseurs 315 fournissant chacun deux polarisations orthogonales, une pluralité $2N$ de modulateurs, un couple de modulateur 321, 322 étant prévu pour chaque longueur d'onde, un codeur chromato-temporel 325 et un multiplexeur en polarisation et en longueur d'onde, 350. Le codeur chromato-temporel 325 code un bloc de symboles $(d_1,...,d_M)$ en une matrice de code **C** de taille $2N \times T$ :

$$\mathbf{C} = \begin{pmatrix} c_{1,1}^{II} & c_{2,1}^{II} & \cdots & c_{N,1}^{II} \\ c_{1,1}^{\perp} & c_{2,1}^{\perp} & \cdots & c_{N,1}^{\perp} \\ c_{1,2}^{II} & c_{2,2}^{II} & \cdots & c_{N,2}^{II} \\ c_{1,2}^{\perp} & c_{2,2}^{\perp} & \cdots & c_{N,2}^{\perp} \\ \vdots & \vdots & \vdots & \vdots \\ c_{1,T}^{II} & c_{2,T}^{II} & \cdots & c_{N,T}^{II} \\ c_{1,T}^{\perp} & c_{2,T}^{\perp} & \cdots & c_{N,T}^{\perp} \end{pmatrix} \qquad (9)$$

où les coefficients $c_{n,t}^{II}$ et $c_{n,t}^{\perp}$ sont en règle générale des coefficients complexes dépendant des symboles d'information $d_1,...,d_M$, le premier servant à moduler une première direction de polarisation du faisceau à la longueur d'onde $\lambda_n$ et le second une seconde direction de polarisation orthogonale à la première. Plus précisément pour chaque longueur d'onde, un premier modulateur 321 modulera la première direction de polarisation à l'aide du coefficient $c_{n,t}^{II}$ et un second modulateur 322 modulera la seconde direction de polarisation. De préférence, on choisira $T = 2N$.

Le fait d'utiliser deux polarisations orthogonales permet d'atteindre un débit deux fois plus élevé que dans le premier mode de réalisation.

On pourra utiliser notamment comme code un code parfait de matrice $2N \times 2N$ tel que mentionné précédemment. Par exemple, pour deux longueurs d'onde et deux polarisations, on utilisera un code parfait de taille 4x4.

Alternativement, on pourra utiliser un code parfait du type décrit dans l'article de S. Yang et al. intitulé « Perfect space-time block codes for parallel MIMO channels » publié dans IEEE International Symposium on Information Theory (ISIT), Seattle, USA Juillet 2006, à la différence près que le degré de liberté spatial est remplacé là encore par le degré de liberté chromatique.

De manière générale, les 2N faisceaux polarisés et modulés sont ensuite multiplexés par le multiplexeur 350 sur la fibre optique 340.

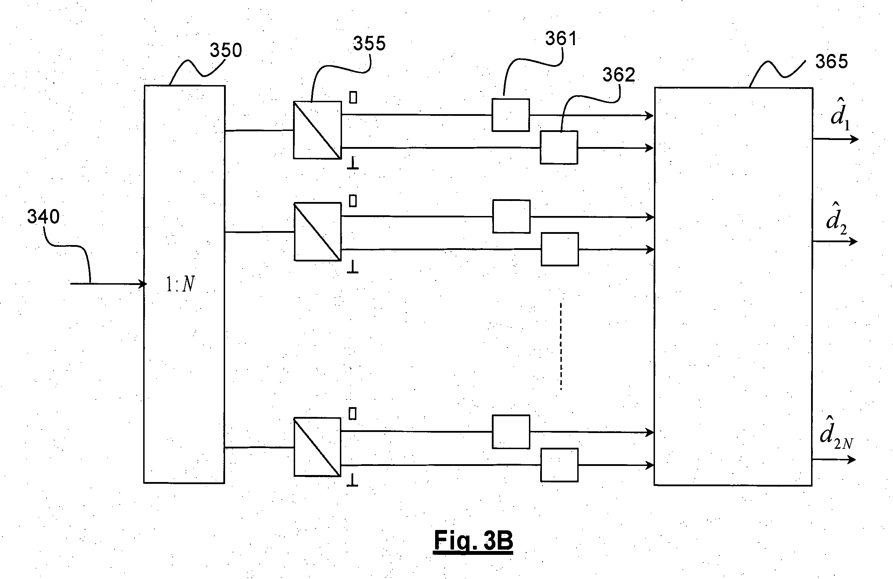

La Fig. 3B représente de manière schématique un récepteur pour système de télécommunication optique WDM, selon un mode de réalisation de l'invention.

Le récepteur comprend un démultiplexeur en longueur d'onde 350 séparant les longueurs d'onde $\lambda_1$ à $\lambda_N$, une pluralité $N$ de polariseurs fournissant pour chaque longueur d'onde un premier faisceau polarisé selon ladite première direction de polarisation et un second faisceau polarisé selon ladite seconde direction de polarisation. Des démodulateurs 361 et 362 démodulent respectivement les premier et second faisceaux à chaque longueur d'onde $\lambda_n$ pour générer des variables de décision $y_{n,t}^{II}$ et $y_{n,t}^{\perp}$. Ces $2N$ variables de décision sont fournies à un décodeur chromato-temporel 365.

Le décodeur chromato-temporel 365 utilise les 2N variables de décision $y_{n,t}^{II}$, $y_{n,t}^{\perp}$ $n=1,..,N$, $t=1,...,T$ relatives à un même intervalle de transmission et en déduit une estimation dure des symboles reçus, $\hat{d}_1, ..., \hat{d}_M$.

Comme dans le premier exemple de récepteur précité, le décodeur 365 met en oeuvre un décodage par réseau de points avec les mêmes variantes que celles exposées ci-dessus. En particulier, on pourra envisager d'utiliser un décodeur par sphère à sorties souples pour réaliser le décodeur chromato-temporel 365.

L'homme du métier comprendra que d'autres modes de réalisation pourront être envisagés sans sortir pour autant sortir du cadre de l'invention. Par exemple, l'émetteur peut effectuer un codage chromato-temporel selon le premier exemple précité pour un premier sous-ensemble de $N'$ longueurs d'onde et un codage chromato-temporel selon le mode de réalisation de l'invention pour un second ensemble de $N''$ longueurs d'onde. Les $2N'$ faisceaux polarisés et les $N''$ faisceaux non polarisés sont alors multiplexés sur la fibre optique. A la réception, on utilise $N''$ polariseurs et $2N''+N'$ démodulateurs fournissant ensemble $2N''+N'$ variables de décision. Le décodeur effectue un décodage par réseau de points de ces $2N''+N'$ variables pour en déduire les symboles estimés $\hat{d}_1, ..., \hat{d}_M$.

Les variantes de décodage chromato-temporel exposées pour le premier exemple de récepteur précité trouvent également à s'appliquer *mutatis mutandis* dans le récepteur selon le mode de réalisation de l'invention.

**EP 2 625 803 B1**

**Revendications**

1. Emetteur pour système de télécommunication optique de type WDM utilisant une pluralité de longueurs d'onde, **caractérisé en ce qu'**il comprend :

    un codeur (325), dit codeur chromato-temporel, transformant chaque bloc de données à transmettre $d_1,...,d_M$ en une matrice de code :

$$\mathbf{C} = \begin{pmatrix} c_{1,1}^{II} & c_{2,1}^{II} & \cdots & c_{N,1}^{II} \\ c_{1,1}^{\perp} & c_{2,1}^{\perp} & \cdots & c_{N,1}^{\perp} \\ c_{1,2}^{II} & c_{2,2}^{II} & \cdots & c_{N,2}^{II} \\ c_{1,2}^{\perp} & c_{2,2}^{\perp} & \cdots & c_{N,2}^{\perp} \\ \vdots & \vdots & \vdots & \vdots \\ c_{1,T}^{II} & c_{2,T}^{II} & \cdots & c_{N,T}^{II} \\ c_{1,T}^{\perp} & c_{2,T}^{\perp} & \cdots & c_{N,T}^{\perp} \end{pmatrix}$$

    chaque élément de la matrice étant relatif à une utilisation de canal, à une longueur d'onde de ladite pluralité et une direction de polarisation ;
    une pluralité de polariseurs (315) respectivement associés aux dites longueurs d'onde, chaque polariseur polarisant un faisceau laser à une longueur d'onde selon deux directions de polarisation ;
    une pluralité de modulateurs (321,322), chaque modulateur modulant un faisceau laser à une longueur d'onde, polarisé selon une direction de polarisation, pendant une utilisation de canal au moyen de l'élément de la matrice correspondant, lesdites deux directions de chaque longueur d'onde étant ainsi modulées ;
    un multiplexeur (330) adapté à multiplexer les faisceaux laser ainsi polarisés et modulés sur une fibre optique (340).

2. Emetteur selon la revendication 1, **caractérisé en ce que** ledit code est linéaire.

3. Emetteur selon la revendication 2, **caractérisé en ce que** le code est un code d'Alamouti.

4. Emetteur selon la revendication 2, **caractérisé en ce que** le code est un code d'argent ou un code d'or.

5. Emetteur selon la revendication 2, **caractérisé en ce que** le code est un code parfait.

6. Récepteur pour recevoir un bloc de symboles transmis par l'émetteur selon la revendication 1, ledit récepteur comprenant un démultiplexeur (350) adapté à /3 démultiplexer le signal reçu en une pluralité de faisceaux ayant des longueurs d'onde différentes, **caractérisé en ce qu'**il comprend en outre :

    une pluralité de polariseurs (355), chaque polariseur polarisant un desdits faisceaux selon une première et une seconde directions de polarisation ;
    une pluralité de démodulateurs (361, 362), chaque démodulateur démodulant un desdits faisceaux polarisés et fournissant une variable de décision pendant une utilisation du canal ;
    un décodeur par réseau de points (365) adapté à recevoir lesdites variables de décision pendant une pluralité d'utilisations de canal et à en déduire une estimation des symboles du dit bloc.

7. Récepteur selon la revendication 6, **caractérisé en ce que** le décodeur par réseau de points est un décodeur par sphère.

8. Récepteur selon la revendication 6, **caractérisé en ce que** le décodeur par réseau de points est un décodeur de type SB-stack.

9. Récepteur selon la revendication 6, **caractérisé en ce que** le décodeur par réseau de points met en oeuvre une réduction LLL du réseau.

**Patentansprüche**

1. Emitter für ein optisches Telekommunikationssystem vom Typ WDM, das eine Mehrzahl von Wellenlängen verwendet, **dadurch gekennzeichnet, dass** er umfasst:

    einen Codierer (325), genannt Farb-Zeit-Codierer, der jeden Block von zu übertragenden Daten $d_1$, ..., $d_M$, in eine Codematrix transformiert:

$$\mathbf{C} = \begin{pmatrix} c_{1,1}^{II} & c_{2,1}^{II} & \cdots & c_{N,1}^{II} \\ c_{1,1}^{\perp} & c_{2,1}^{\perp} & \cdots & c_{N,1}^{\perp} \\ c_{1,2}^{II} & c_{2,2}^{II} & \cdots & c_{N,2}^{II} \\ c_{1,2}^{\perp} & c_{2,2}^{\perp} & \cdots & c_{N,2}^{\perp} \\ \vdots & \vdots & \vdots & \vdots \\ c_{1,T}^{II} & c_{2,T}^{II} & \cdots & c_{N,T}^{II} \\ c_{1,T}^{\perp} & c_{2,T}^{\perp} & \cdots & c_{N,T}^{\perp} \end{pmatrix}$$

    wobei sich jedes Element der Matrix auf eine Kanalverwendung, auf eine Wellenlänge der Mehrzahl und auf eine Polarisationsrichtung bezieht;
    eine Mehrzahl von Polarisatoren (315), die jeweils den Wellenlängen zugeordnet sind, wobei jeder Polarisator einen Laserstrahl mit einer Wellenlänge gemäß zwei Polarisationsrichtungen polarisiert;
    eine Mehrzahl von Modulatoren (321, 322), wobei jeder Modulator einen Laserstrahl mit einer Wellenlänge, der gemäß einer Polarisationsrichtung polarisiert ist, während einer Kanalverwendung mithilfe des entsprechenden Matrixelements moduliert, wobei die zwei Richtungen jeder Wellenlänge somit moduliert sind;
    einen Multiplexer (330), der dazu ausgelegt ist, die derart polarisierten und modulierten Laserstrahlen auf einer optischen Faser (340) zu multiplexieren.

2. Emitter nach Anspruch 1, **dadurch gekennzeichnet, dass** der Code linear ist.

3. Emitter nach Anspruch 2, **dadurch gekennzeichnet, dass** der Code ein Alamouti-Code ist.

4. Emitter nach Anspruch 2, **dadurch gekennzeichnet, dass** der Code ein Silber-Code oder ein Gold-Code ist.

5. Emitter nach Anspruch 2, **dadurch gekennzeichnet, dass** der Code ein perfekter Code ist.

6. Empfänger zum Empfangen eines Blocks von Symbolen, die durch den Emitter nach Anspruch 1 übertragen sind, wobei der Empfänger einen Demultiplexer (350) umfasst, der dazu ausgelegt ist, das empfangene Signal in eine Mehrzahl von Strahlen mit unterschiedlichen Wellenlängen zu demultiplexieren, **dadurch gekennzeichnet, dass** er ferner umfasst:

    eine Mehrzahl von Polarisatoren (355), wobei jeder Polarisator einen der Strahlen gemäß einer ersten und einer zweiten Polarisationsrichtung polarisiert;
    eine Mehrzahl von Demodulatoren (361, 362), wobei jeder Demodulator einen der polarisierten Strahlen demoduliert und während einer Kanalverwendung eine Entscheidungsvariable liefert;
    einen Punktnetzdecodierer (365), der dazu ausgelegt ist, die Entscheidungsvariablen während einer Mehrzahl von Kanalverwendungen zu empfangen und hieraus eine Abschätzung der Symbole des Blocks abzuleiten.

7. Empfänger nach Anspruch 6, **dadurch gekennzeichnet, dass** der Punktnetzdecodierer ein Kugeldecodierer ist.

8. Empfänger nach Anspruch 6, **dadurch gekennzeichnet, dass** der Punktnetzdecodierer ein Decodierer vom Typ SB-Stack ist.

9. Empfänger nach Anspruch 6, **dadurch gekennzeichnet, dass** der Punktnetzdecodierer eine LLL-Reduktion des Netzes verwendet.

**Claims**

1. A transmitter for an optical telecommunication system of the WDM type, using multiple wavelengths, **characterised in that** it includes:

   an encoder (325), called a chromato-temporal encoder, transforming each block of data to be transmitted $d_1,...,d_M$ into a code matrix:

$$\mathbf{C} = \begin{pmatrix} c_{1,1}^{II} & c_{2,1}^{II} & \cdots & c_{N,1}^{II} \\ c_{1,1}^{\perp} & c_{2,1}^{\perp} & \cdots & c_{N,1}^{\perp} \\ c_{1,2}^{II} & c_{2,2}^{II} & \cdots & c_{N,2}^{II} \\ c_{1,2}^{\perp} & c_{2,2}^{\perp} & \cdots & c_{N,2}^{\perp} \\ \vdots & \vdots & \vdots & \vdots \\ c_{1,T}^{II} & c_{2,T}^{II} & \cdots & c_{N,T}^{II} \\ c_{1,T}^{\perp} & c_{2,T}^{\perp} & \cdots & c_{N,T}^{\perp} \end{pmatrix}$$

   where each element of the matrix relates to one channel use and one wavelength of the said multiple wavelengths, and to a polarisation direction;
   multiple polarisers (315), associated respectively with the said wavelengths, where each polariser polarises a laser beam at a wavelength in two polarisation directions;
   multiple modulators (321, 322), where each modulator modulates a laser beam at a wavelength, polarised in a polarisation direction, during a channel use by means of the corresponding matrix element, where the said two directions of each wavelength are modulated by this means;
   a multiplexer (330) able to multiplex the laser beams polarised and modulated in this manner in an optical fibre (340).

2. A transmitter according to claim 1, **characterised in that** the said code is linear.

3. A transmitter according to claim 2, **characterised in that** the code is an Alamouti's code.

4. A transmitter according to claim 2, **characterised in that** the code is a silver code or a golden code.

5. A transmitter according to claim 2, **characterised in that** the code is a perfect code.

6. A receiver to receive a block of symbols transmitted by the transmitter according to claim 1, where the said receiver includes a demultiplexer (350) able to demultiplex the received signal into multiple beams having different wavelengths, **characterised in that** it also includes:

   multiple polarisers (355), where each polariser polarises one of the said beams in a first and a second polarisation direction;
   multiple demodulators (361, 362), where each demodulator demodulates one of the said polarised beams, and supplies a decision variable during a use of the channel;
   a lattice decoder (365) able to receive the said decision variables during multiple channel uses, and to deduce from them an estimate of the symbols of the said block.

7. A receiver according to claim 6, **characterised in that** the lattice decoder is a sphere decoder.

8. A receiver according to claim 6, **characterised in that** the lattice decoder is a decoder of the SB-stack type.

**9.** A receiver according to claim 6, **characterised in that** the lattice decoder implements an LLL reduction of the network.

**Fig. 1**

EP 2 625 803 B1

**Fig. 2A**

**Fig. 2B**

**Fig. 3A**

**Fig. 3B**

EP 2 625 803 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20090334224 A
- US 2004004755 A
- US 7643760 B
- US 2007122153 A
- FR 2930861 A

### Littérature non-brevet citée dans la description

- **J. LEIBRICH et al.** CR-RZ-DPSK for suppression of XPM on dispersion-managed long-haul optical WDM transmission on standard single-mode fiber. *IEEE Photonics Technology Letters,* Février 2002, vol. 14 (2), 155
- **S.M. ALAMOUTI.** A transmit diversity technique for wireless communications. *IEEE Journal on selected areas in communications,* Octobre 1998, vol. 16, 1451-1458
- **J.C. BELFIORE et al.** *The golden code : a 2x2 full rate space-time code with nonvanishing déterminants*
- **E. BIGLIERI et al.** On fast-decodable space-time block codes. *IEEE Trans. on Inf. Theory,* Février 2009, vol. 55 (2), 524-530
- **G. REKAYA BEN OTHMAN et al.** Ideal Structure of the silver code. *Proc. of ISIT 2009,* 28 Juin 2009, 2818-2822
- **F. OGGIER et al.** Perfect space-time block codes. *IEEE Trans. Inf. Theory,* Septembre 2006, vol. 52 (9), 3885-3902
- **P. ELIA et al.** Perfect space-time codes for any number of antennas. *IEEE Trans. Inf. Theory,* Novembre 2007, vol. 55 (11), 3853-3868
- **M.O. DAMEN et al.** Linear threaded algebraic space-time constellations. *IEEE Trans. on Information Theory,* Octobre 2003, vol. 49 (10), 2372-2388
- **L. LUZZI et al.** *Augmented Lattice Reduction for MIMO decoding*
- **J. BOUTROS et al.** Soft-input soft-output lattice sphere décoder for linear channels. *Proc. of the IEEE Globecom '03*
- **R. OUERTANI et al.** The spherical bound stack decoder. *IEEE International Conf. on wireless and mobile computing, networking and communications, (WiMob),* Octobre 2008
- **S. YANG et al.** Perfect space-time block codes for parallel MIMO channels. *IEEE International Symposium on Information Theory (ISIT),* Juillet 2006